# EUROPÄISCHE PATENTSCHRIFT

(11) **EP 3 589 851 B1**
(45) Veröffentlichungstag und Bekanntmachung des Hinweises auf die Patenterteilung: **26.05.2021**
(21) Anmeldenummer: 18704919.2
(22) Anmeldetag: 02.02.2018
(51) Int. Cl.: F16C 11/06

(54) **EINLEGER FÜR EIN KUGELGELENK IN EINEM KRAFTFAHRZEUG, KUGELGELENK ODER LENKER MIT EINEM SOLCHEN EINLEGER UND VERFAHREN ZUM HERSTELLEN EINES SOLCHEN EINLEGERS, EINES SOLCHEN KUGELGELENKS ODER EINES SOLCHEN LENKERS**
INSERT FOR A BALL JOINT IN A MOTOR VEHICLE, BALL JOINT OR LINK HAVING AN INSERT OF THIS TYPE, AND METHOD FOR PRODUCING AN INSERT OF THIS TYPE, A BALL JOINT OF THIS TYPE OR A LINK OF THIS TYPE
INSERT POUR UN JOINT À ROTULE DANS UN VÉHICULE AUTOMOBILE, JOINT À ROTULE OU ENTRAÎNEMENT À LA MAIN AYANT UN TEL INSERT ET PROCÉDÉ DE FABRICATION D'UN TEL INSERT, D'UN JOINT À ROTULE OU D'UN CONTRÔLEUR À MAIN

(30) Priorität: 03.03.2017 DE 102017203540
(43) Veröffentlichungstag der Anmeldung: 08.01.2020
(73) Patentinhaber: ZF Friedrichshafen AG, 88046 Friedrichshafen (DE)
(72) Erfinder: NACHBAR, Frank, 49088 Osnabrück (DE); PABST, Jan, 49082 Osnabrück (DE); GRUBE, Volker, 49356 Diepholz (DE)
(74) Vertreter: ZF Friedrichshafen AG
(86) Internationale Anmeldenummer: PCT/EP2018/052595
(87) Internationale Veröffentlichungsnummer: WO 2018/158030

(56) Entgegenhaltungen:
- EP-A1- 0 379 392
- EP-A1- 0 801 238
- EP-A1- 3 023 652
- DE-A1- 4 421 403
- DE-A1-102010 036 644
- DE-U1- 29 701 902
- GB-A- 1 181 686
- US-A1- 2013 234 412

## Beschreibung

Die Erfindung betrifft einen Einleger für ein Kugelgelenk in einem Kraftfahrzeug mit einer ersten Teilstruktur zum mindestens teilweise gleitlagernden Kontaktieren einer Gelenkkugel, wobei die erste Teilstruktur mittels Umspritzen mit einer Gelenkschale und/oder einem Gelenkgehäuse verbindbar ist und wobei mittels einer offenen Teilstruktur eine käfigartige Ausbildung zum Umgeben der Gelenkkugel realisiert ist. Des Weiteren betrifft die Erfindung ein Kugelgelenk mit einer Gelenkkugel und eines solchen Einlegers, ein Fahrwerksbauteil oder Lenker mit einem solchen Einleger oder Kugelgelenk sowie ein Verfahren zum Herstellen eines solchen Einlegers, eines solchen Kugelgelenks und/oder eines solchen Fahrwerksbauteils oder Lenkers.

Ein derartiger Einleger ist aus der DE 297 01 902 U1 bekannt. Hierbei ist eine offene Teilstruktur mittels eines Gleitgewebes realisiert und das Gleitgewebe ist von einem eine Lagerschale bildenden Material durchdrungen.

Aus der EP 3 023 652 A1 ist ein Einleger bekannt, bei dem die erste Teilstruktur als ein Kappenelement zum Abdecken einer Polfläche der Gelenkkugel ausgebildet ist, wobei das Kappenelement einen innenliegenden Freiraum zwischen der Polfläche und dem Kappenelement hinreichend abdichtet, so dass beim Umspritzen der Gelenkkugel keine Spritzmasse in den Freiraum gelangen kann. Hierdurch ist gewährleistet, dass die Gelenkkugel nach dem Umspritzen sowohl um die Längsachse des Kugelgelenks verdreht als auch gegen die Längsachse verkippt werden kann.

Zwar ist grundsätzlich auch eine direkte Umspritzung einer Gelenkkugel mit einer Polfläche möglich. Jedoch ist dann nur noch eine Drehbewegung bzw. Rotationsbewegung der Gelenkkugel um die Längsachse des Kugelgelenks möglich. Eine Kippbewegung, Schwenkbewegung bzw. oszillierende Bewegung der Gelenkkugel ist dagegen blockiert. Diese in der Regel unerwünschte Beschränkung der Bewegungsfreiheit wird mittels der ersten Teilstruktur bzw. des Kappenelementes verhindert.

Nachteilig ist jedoch, dass die Positionierung der ersten Teilstruktur bzw. des Kappenelementes innerhalb eines Werkzeugs zum Umspritzen der Gelenkkugel, insbesondere einem Spritzgusswerkzeug, aufwendig ist. Hierdurch können die Möglichkeiten für das Umspritzen der Gelenkkugel zusätzlich beschränkt sein.

Des Weiteren ist nachteilig, dass bei einer Gelenkschale und/oder einem Gelenkgehäuse aus Kunststoff die erreichbare Ausziehkraft für das Ausziehen der Gelenkkugel aus der Gelenkschale und/oder dem Gelenkgehäuse nicht hinreichend groß sein kann. Insbesondere kann die erreichbare Ausziehkraft bei Bauteilen aus Kunststoffen durch die mit Kunststoffbauteilen realisierbare Geometrie beschränkt sein. Die realisierbaren Geometrien sind aufgrund der geforderten Beweglichkeit der Gelenkkugel, insbesondere hinsichtlich einer Kippbewegung, und/oder aufgrund von Bauraumanforderungen sowie im Hinblick auf eine geforderte Ausziehkraft begrenzt. Es besteht somit die Gefahr, dass die Gelenkkugel mit einer Ausziehkraft aus der Gelenkschale und/oder dem Gelenkgehäuse herausziehbar ist, die unterhalb eines geforderten Schwellwertes liegt.

Es ist daher die der Erfindung zu Grunde liegende Aufgabe, einen Einleger, ein Kugelgelenk und/oder ein Verfahren der eingangs genannten Art derart weiterzuentwickeln, dass die Positionierbarkeit und/oder Handhabbarkeit des Einlegers verbessert ist. Insbesondere soll zusätzlich zu einer Polflächenabdeckung eine Erhöhung der Ausziehkraft realisierbar sein. Vorzugsweise soll eine alternative Ausführungsform bereitgestellt werden.

Die der Erfindung zu Grunde liegende Aufgabe wird mit einem Einleger nach Anspruch 1, einem Kugelgelenk nach Anspruch 9, einem Fahrwerksbauteil oder Lenker nach Anspruch 13 und/oder einem Verfahren nach Anspruch 14 gelöst. Bevorzugte Weiterbildungen der Erfindung finden sich in den Unteransprüchen und in der nachfolgenden Beschreibung.

Der Einleger ist für ein Kugelgelenk in einem Kraftfahrzeug vorgesehen und/oder ausgebildet. Der Einleger weist eine erste Teilstruktur zum mindestens teilweise gleitlagernden Kontaktieren einer Gelenkkugel auf. Somit kann die erste Teilstruktur die Oberfläche der Gelenkkugel mindestens teilweise berühren oder an dieser anliegen. Hierbei ist jedoch eine Relativbewegung der Gelenkkugel zu dem Einleger und/oder der ersten Teilstruktur ermöglicht. Die erste Teilstruktur ist mittels Umspritzen mit einer Gelenkschale und/oder mit einem Gelenkgehäuse verbindbar. Insbesondere ist die erste Teilstruktur mittels Umspritzen in eine Gelenkschale und/oder in ein Gelenkgehäuse integrierbar. Hierbei kann die Gelenkschale und/oder das Gelenkgehäuse mit der ersten Teilstruktur ein Gleitlager für die Gelenkkugel bereitstellen. Des Weiteren ist mittels einer offenen Teilstruktur eine käfigartige Ausbildung zum Umgeben der Gelenkkugel realisiert.

Hierbei ist von Vorteil, dass der Einleger aufgrund der mindestens teilweise käfigartigen Ausbildung von einem Material beim Umspritzen mindestens teilweise durchdrungen und/oder umspritzt werden kann. Des Weiteren kann der Einleger aufgrund der käfigartigen Ausbildung im Wesentlichen um die Gelenkkugel herum angeordnet werden. Hierdurch kann die Positionierbarkeit und/oder Handhabbarkeit des Einlegers, insbesondere beim Einsetzen in einem Werkzeug zum Umspritzen der Gelenckugel, verbessert werden. Zudem kann die käfigartige Ausbildung eine Versteifung des Einlegers und/oder eines Kugelgelenks mit einem solchen Einleger ermöglichen. Hierdurch kann eine höhere oder hinreichend hohe Ausziehkraft erreicht werden. Vorzugsweise wird unter einem Umgeben der Gelenkkugel ein in Bezug zu der käfigartigen Ausbildung und/oder zu der offenen Teilstruktur beabstandetes Umgeben des Einlegers von der Gelenkkugel verstanden. Somit kann der Einleger zumindest bezüglich der käfigartigen Ausbildung und/oder der offenen Teilstruktur kontaktfrei zu der Gelenkkugel angeordnet sein. Vorzugsweise ist lediglich die erste Teilstruktur zum direkten Kontaktieren der Gelenkkugel ausgebildet. Die offene Teilstruktur kann in Bezug zu der ersten Teilstruktur als eine zweite Teilstruktur aufgefasst werden. Mittels der offenen Teilstruktur kann die käfigartige Ausbildung des Einlegers realisiert werden. Insbesondere bedeutet hierbei "offen", dass die Teilstruktur mehrere Ausnehmungen, Durchbrüche und/oder Löcher aufweist. Hierbei können die offenen Bereiche der offenen Teilstruktur einen größeren Anteil an der Struktur einnehmen, als die geschlossenen Bereiche der Teilstruktur. Die offene Teilstruktur kann einstückig oder mehrteilig ausgebildet sein. Der Einleger ist mehrteilig ausgebildet.

Die erste Teilstruktur ist als ein Kappenelement ausgebildet. Der Einleger und/oder das Kappenelement können somit zum Abdecken einer Polfläche der Gelenkkugel ausgebildet sein. Das Kappenelement ist wiederum zum Ausbilden eines Freiraums zwischen der Polfläche und dem Kappenelement ausgebildet. Der Freiraum kann mittels des Kappenelementes gegenüber der Umgebung abgedichtet und/oder geschlossen sein. Hierbei ermöglicht das Kappenelement ein Umspritzen der Gelenckugel. Mittels des Kappenelementes wird ein Eindringen einer Spritzmasse und/oder Spritzgussmasse in den Freiraum verhindert. Insbesondere ist der Freiraum als ein Kugelsegment ausgebildet. Vorzugsweise entspricht der Radius des Kugelsegments des Freiraums und/oder einer der Polfläche zugewandten Innenseite des Kappenelementes dem Radius der Gelenkkugel. Hierzu kann das Kappenelement auf seiner der Polfläche zugewandten Seite konkav ausgebildet sein.

Insbesondere ist mittels des Kappenelementes und der offenen Teilstruktur die käfigartige Struktur gebildet. Hierbei kann das Kappenelement zum Abdecken der Polfläche, insbesondere mindestens im Bereich der Polfläche, in sich geschlossen ausgebildet sein. Somit weist das Kappenelement zumindest in dem zum Abdecken der Polfläche vorgesehenen Bereich keine Ausnehmungen, Durchbrüche und/oder Löcher auf.

Vorzugsweise wird im Rahmen der vorliegenden Anmeldung unter einer Polfläche ein Oberflächenbereich der Gelenkkugel verstanden, der eine Stirnfläche eines Kugelzapfens bildet. Die Polfläche ist im Vergleich zur Kugeloberfläche der Gelenkkugel abgeflacht. Beispielsweise ist die Polfläche eben oder im Wesentlichen eben ausgebildet. Die Gelenkkugel kann ein freies Ende des Kugelzapfens sein. Insbesondere kann die Polfläche als ein von dem Gelenkzapfen abgewandtes freies Ende des Kugelzapfens ausgebildet sein.

Insbesondere wird unter einem "Kippen" oder "Verkippen" der Gelenkkugel eine Bewegung der Gelenkkugel relativ zu dem Einleger, einer Gelenkschale und/oder einem Gelenkgehäuse verstanden, bei welcher eine Veränderung eines zwischen einer Längsachse der Gelenkkugel, insbesondere eines Kugelzapfens, und der Längsachse des Einlegers, der Gelenkschale und/oder des Gelenkgehäuses eingeschlossenen Winkels eintritt. Bevorzugt erfolgt das Kippen oder Verkippen um den Mittelpunkt der Gelenkkugel. In einer nicht gekippten Lage oder Nulllage der Gelenckugel ist der Kippwinkel vorzugsweise Null und/oder die Längsachse der Gelenkkugel fällt mit der Längsachse des Einlegers, der Gelenkschale und/oder des Gelenkgehäuses zusammen.

Insbesondere wird unter einem "Drehen" oder "Verdrehen" der Gelenkkugel eine Bewegung der Gelenkkugel verstanden, bei welcher die Gelenkkugel relativ zu dem Einleger, der Gelenkschale und/oder des Gelenkgehäuses um die Längsachse der Gelenkkugel, insbesondere eines Kugelzapfens, gedreht bzw. rotiert wird.

Die Gelenkkugel kann ein Bestandteil eines Kugelzapfens sein. Der Kugelzapfen kann Bestandteil eines Kugelgelenks sein. Das Kugelgelenk kann eine Gelenkschale und/oder ein Gelenkgehäuse aufweisen. Insbesondere ist die Gelenkkugel bewegbar in der Gelenkschale und/oder in dem Gelenkgehäuse gelagert.

Vorzugsweise ist die offene Teilstruktur mit der ersten Teilstruktur, insbesondere dem Kappenelement, verbunden. Insbesondere ist die offene Teilstruktur fest und/oder im Wesentlichen unbeweglich an der ersten Teilstruktur befestigt. Hierbei kann die Verbindung der offenen Teilstruktur mit der ersten Teilstruktur, insbesondere dem Kappenelement, lösbar ausgebildet sein. Vorzugsweise ist aufgrund der Verbindung der offenen Teilstruktur mit der ersten Teilstruktur, insbesondere dem Kappenelement, die käfigartige Struktur des Einlegers gebildet. Aufgrund der käfigartigen Ausbildung und/oder der käfigartigen Struktur weist der Einleger mehrere Ausnehmungen, Durchbrüche und/oder Öffnungen auf. Die erste Teilstruktur und die offene Teilstruktur können gemeinsam als eine einzige, einstückige Struktur ausgebildet sein. Somit kann der gesamte Einleger einstückig ausgebildet sein.

Insbesondere ist die offene Teilstruktur zum kontaktlosen Umgeben der Gelenkkugel ausgebildet. Somit ist die offene Teilstruktur derart ausgebildet, dass diese bei einer Anordnung des Einlegers an der Gelenkkugel von der Oberfläche der Gelenkkugel beabstandet ist. Insbesondere liegt lediglich die erste Teilstruktur an der Gelenkkugel mindestens teilweise an. Beispielsweise kann die erste Teilstruktur in der Ausbildung als ein Kappenelement in einem die Polfläche umlaufenden Bereich, vorzugsweise ringartig, an der Gelenkkugel anliegen.

Gemäß einer Weiterbildung ist die offene Teilstruktur formschlüssig, kraftschlüssig und/oder stoffschlüssig mit der ersten Teilstruktur, insbesondere dem Kappenelement, verbunden. Insbesondere ist die offene Teilstruktur mittels einer Steckverbindung oder Klippverbindung an der ersten Teilstruktur, insbesondere dem Kappenelement, befestigt. Somit kann die offene Teilstruktur werkzeuglos an die erste Teilstruktur, insbesondere das Kappenelement, angeordnet werden. Hierdurch ist die Herstellung des gesamten Einlegers besonders einfach und/oder kostengünstig realisierbar.

Vorzugsweise weist der Einleger ein Verstärkungselement auf. Das Verstärkungselement kann zum Erhöhen einer Ausziehkraft ausgebildet sein. Insbesondere bezieht sich die Ausziehkraft auf die notwendige Kraft zum Ausziehen der Gelenkkugel aus der käfigartigen Ausbildung und/oder der käfigartigen Struktur oder einer den Einleger aufweisenden Gelenkschale oder eines den Einleger aufweisenden Gelenkgehäuses. Somit kann die Gefahr eines unerwünschten Ausziehens der Gelenkkugel, insbesondere unterhalb eines vorgegebenen Schwellenwertes, aus dem Einleger, aus einer den Einleger aufweisenden Gelenkschale und/oder aus einem den Einleger aufweisenden Gelenkgehäuse reduziert werden. Insbesondere ist das Verstärkungselement ringartig und/oder ringförmig ausgebildet. Das Verstärkungselement ist zum beabstandeten Umlaufen der Gelenkkugel ausgebildet. Vorzugsweise weist das Verstärkungselement einen Innendurchmesser auf, der größer ist als der maximale Außendurchmesser der Gelenkkugel. In einer nicht gekippten Lage und/oder Nulllage der Gelenkkugel kann eine Ebene des Verstärkungselementes rechtwinklig zu einer Längsachse der Gelenkkugel und/oder eines die Gelenkkugel aufweisenden Kugelzapfens ausgerichtet sein.

Vorzugsweise ist das Verstärkungselement rotationssymmetrisch und/oder koaxial zu einer Längsachse des Einlegers angeordnet. Insbesondere ist im Rahmen der vorliegenden Anmeldung unter einer Längsachse jeweils eine Mittellängsachse zu verstehen. Der Einleger, die Gelenkkugel, die Gelenkschale, das Gelenkgehäuse und/oder das Kugelgelenk kann jeweils rotationssymmetrisch zu einer Längsachse bzw. Mittellängsachse ausgebildet sein. Das Verstärkungselement kann ein Bestandteil der offenen Teilstruktur sein. Das Verstärkungselement kann aus einem Material hergestellt sein, das eine größere Festigkeit und/oder Steifigkeit aufweist als ein anderes Material zum mindestens teilweisen Umspritzen des Einlegers.

Der Einleger weist mindestens ein oder mehrere Verbindungselemente auf. Hierbei sind die Verbindungselemente Bestandteile der offenen Teilstruktur. Hierbei können die Verbindungselemente jeweils strangartig und/oder stabartig ausgebildet sein. Vorzugsweise sind die Verbindungselemente zum beabstandeten Anordnen bezüglich der Gelenkkugel ausgebildet. In einer nicht gekippten Lage und/oder Nulllage der Gelenkkugel in Bezug zu dem Einleger können sich die Verbindungselemente parallel zur Längsachse des Einlegers, der Gelenkkugel und/oder des Kugelzapfens erstrecken. Insbesondere ist das Verstärkungselement mittels der Verbindungselemente mit dem Kappenelement verbunden. Das Verbindungselement, insbesondere ein von der ersten Teilstruktur, insbesondere dem Kappenelement, abgewandtes Ende und/oder ein dem Verstärkungselement zugewandtes Ende, kann elastisch ausgebildet sein. Vorzugsweise ist das Verbindungselement quer zu seiner Längserstreckung elastisch. Hierdurch kann das Montieren und/oder Verbinden des Verstärkungselementes mit den Verbindungselementen erleichtert sein. Insbesondere ist das Verstärkungselement, vorzugsweise von außen, über die Enden der Verbindungselemente schiebbar, um eine formschlüssige und/oder kraftschlüssige Verbindung zwischen den Verbindungselementen und dem Verstärkungselement herzustellen.

Ein erstes Ende der Verbindungselemente ist jeweils formschlüssig und/oder kraftschlüssig an der ersten Teilstruktur, insbesondere dem Kappenelement, befestigt. Ausgehend von der ersten Teilstruktur, insbesondere dem Kappenelement, können sich die Verbindungselemente im Wesentlichen parallel zueinander in Richtung des Verstärkungselementes erstrecken. Ein von dem ersten Ende abgewandtes zweites Ende der Verbindungselemente ist jeweils mit dem Verstärkungselement formschlüssig und/oder kraftschlüssig verbunden. Vorzugsweise ist die Verbindung der Verbindungselemente mit der ersten Teilstruktur, insbesondere dem Kappenelement, und/oder mit dem Verstärkungselement als eine Steckverbindung oder Klippverbindung ausgebildet. Hierdurch ist die Herstellung der jeweiligen Verbindung vereinfacht. Die Verbindungselemente und das Verstärkungselement können die offene Teilstruktur, insbesondere in Zusammenwirkung mit dem Kappenelement, bilden. Vorzugsweise sind die Verbindungselemente, insbesondere drei Verbindungselemente, gleichmäßig an dem Verstärkungselement angeordnet.

Ein erfindungsgemäßes Kugelgelenk weist eine Gelenkkugel und einen erfindungsgemäßen Einleger auf. Insbesondere weist das Kugelgelenk eine Gelenkschale, ein Gelenkgehäuse und/oder einen Kugelzapfen auf. Der Kugelzapfen kann die Gelenckugel und einen Gelenkzapfen haben. Hierbei können die Gelenkschale und/oder das Gelenkgehäuse zum bewegbaren und/oder gleitlagernden Aufnehmen der Gelenkkugel des Kugelzapfens ausgebildet sein. Die Gelenkschale kann mehrteilig, insbesondere zweiteilig, ausgebildet sein. Vorzugsweise ist der Einleger mindestens teilweise oder vollständig in die Gelenkschale und/oder in das Gelenkgehäuse integriert. Hierbei kann der Einleger mindestens teilweise oder vollständig mittels eines geeigneten Verfahrens zum Herstellen der Gelenkschale und/oder des Gelenkgehäuses umspritzt sein.

Ein entsprechendes Verfahren kann beispielsweise als ein Spritzgussverfahren ausgebildet sein. Somit kann der Einleger teilweise oder vollständig in dem Material der Gelenkschale und/oder des Gelenkgehäuses eingeschlossen sein. Hierdurch ist die Position des Einlegers innerhalb der Gelenkschale und/oder des Gelenkgehäuses festlegbar, wobei eine unerwünschte Positionsveränderung des Einlegers in Bezug zu der Gelenkschale und/oder des Gelenkgehäuses zuverlässig verhindert ist. Vorzugsweise ist das Verstärkungselement vollständig in der Gelenkschale und/oder in dem Gelenkgehäuse integriert. Insbesondere ist unter einem Integrieren ein vollständiges oder teilweises Einbetten des Einlegers in dem Material der Gelenkschale und/oder des Gelenkgehäuses zu verstehen, wobei das Material den Einleger kontaktiert, positioniert und/oder hält.

Vorzugsweise ist die Gelenkschale und/oder das Gelenkgehäuse aus einem Kunststoffmaterial, insbesondere einem faserverstärktem Kunststoff, hergestellt.

Insbesondere ist der Einleger, die erste Teilstruktur, die offen Teilstruktur, das Kappenelement, das Verbindungselement und/oder das Verstärkungselement aus Kunststoff hergestellt. Hierbei kann der Einleger, die erste Teilstruktur, die offene Teilstruktur, das Kappenelement, das Verbindungselement und/oder das Verstärkungselement aus einem steiferen Kunststoffmaterial gefertigt sein als das Kunststoffmaterial zum Umspritzen des Einlegers. Vorzugsweise ist der Einleger aus unterschiedlichen Materialien hergestellt. Hierbei kann das Kappenelement aus einem Kunststoffmaterial hergestellt sein und das Verbindungselement und/oder das Verstärkungselement kann aus einem Metall gebildet sein. Somit kann der Einleger als ein Hybridbauteil aus mindestens zwei unterschiedlichen Materialen realisiert sein.

Vorzugsweise sind die Verbindungselemente teilweise in der Gelenkschale und/oder in dem Gelenkgehäuse integriert. Insbesondere ist ein dem Verstärkungselement zugewandtes Ende der Verbindungselemente vollständig in dem Material der Gelenkschale und/oder des Gelenkgehäuses integriert. Ein von dem Verstärkungselement abgewandtes und der ersten Teilstruktur, insbesondere dem Kappenelement, zugewandtes Ende der Verbindungselemente kann nicht in das Material der Gelenkschale und/oder des Gelenkgehäuses integriert sein. Insbesondere kann die erste Teilstruktur, insbesondere das Kappenelement, nicht in dem Material der Gelenkschale und/oder des Gelenkgehäuses integriert sein. Somit kann im Bereich der ersten Teilstruktur, insbesondere des Kappenelementes, und/oder dem der ersten Teilstruktur, insbesondere dem Kappenelement, zugewandten Ende der Verbindungselemente auf ein Umspritzen des Kappenelementes und/oder der dem Kappenelement zugewandten Ende der Verbindungselemente verzichtet werden. Hierdurch ist eine Materialeinsparung realisierbar. Aufgrund der in dem Material der Gelenkschale und/oder des Gelenkgehäuses gehaltenen Verbindungselemente ist auch die mit den Verbindungselementen verbundene erste Teilstruktur, insbesondere das Kappenelement, zuverlässig gehalten. In einer alternativen Ausführungsform kann der Einleger jedoch auch vollständig, insbesondere inklusive der ersten Teilstruktur, in das Material der Gelenkschale und/oder des Gelenkgehäuses integriert sein. In einer weiteren alternativen Ausführungsform können das Verstärkungselement und die Verbindungselemente vollständig und die erste Teilstruktur, insbesondere das Kappenelement, teilweise in das Material der gelenkschale und/oder des Gelenkgehäuses integriert sein.

Hierbei kann insbesondere ein Verbindungsbereich der Verbindungselemente mit dem Kappenelement von dem Material umschlossen sein. Lediglich eine von der Gelenkkugel abgewandte Seite des Kappenelementes kann, insbesondere zur Materialeinsparung, nicht in das Material integriert sein.

Vorzugsweise deckt die erste Teilstruktur, insbesondere das Kappenelement, die Polfläche abdichtend ab. Hierdurch kann ein Eindringen des Materials beim Umspritzen des Einlegers zum Herstellen der Gelenkschale und/oder des Gelenkgehäuses in den Freiraum zwischen dem Kappenelement und der Gelenkkugel vermieden werden. Insbesondere ist das Verstärkungselement in einem von der Polfläche abgewandten und/oder einem Gelenkzapfen zugewandten Bereich der Gelenkkugel angeordnet. Vorzugsweise ist das Verstärkungselement von der Gelenkkugel beabstandet. Mehrere von der Gelenkkugel beabstandete Verbindungselemente können sich von der ersten Teilstruktur, insbesondere dem Kappenelement, zum Verstärkungselement erstrecken. Somit kann die ersten Teilstruktur, insbesondere das Kappenelement, ein erstes Ende des Einlegers und das Verstärkungselement ein von dem ersten Ende abgewandtes zweites Ende des Einlegers darstellen. Hierbei kann das erste Ende des Einlegers der Polfläche der Gelenkkugel zugeordnet und das zweite Ende des Einlegers ist einem dem Gelenkzapfen zugewandten Bereich der Gelenkkugel zugeordnet sein.

Vorzugsweise ist die offene Teilstruktur von der Gelenkkugel beabstandet. Hierdurch kann der Abstand zwischen der offenen Teilstruktur und der Gelenkkugel mindestens teilweise mit einem Material, insbesondere Spritzgussmaterial, ausgefüllt sein. Insbesondere ist die offene Teilstruktur mindestens teilweise oder vollständig von dem Material oder Spritzgussmaterial umgeben.

Bei einem erfindungsgemäßen Verfahren wird ein erfindungsgemäßer Einleger und/oder ein erfindungsgemäßes Kugelgelenk hergestellt, in dem insbesondere eine käfigartige Ausbildung zum Umgeben der Gelenkkugel realisiert wird. Insbesondere handelt es sich bei dem gemäß dem erfindungsgemäßen Verfahren hergestellten Einleger und/oder dem Kugelgelenk um einen zuvor beschriebenen Einleger bzw. ein entsprechendes Kugelgelenk. Vorzugsweise ist das Verfahren gemäß allen im Zusammenhang mit dem hier beschriebenen erfindungsgemäßen Einleger und/oder dem hier beschriebenen erfindungsgemäßen Kugelgelenk erläuterten Ausgestaltungen weitergebildet.

Vorzugsweise wird zunächst die erste Teilstruktur, insbesondere in der Ausbildung als ein Kappenelement, bereitgestellt. Anschließend können die Verbindungselemente mit der ersten Teilstruktur, insbesondere dem Kappenelement, verbunden werden. Hieran folgend wird das Verstärkungselement mit den Verbindungselementen verbunden. Hierdurch ist der Einleger fertiggestellt. Alternativ kann der Einleger in einem einzigen Schritt als eine einstückige und/oder einteilige Struktur ausgebildet sein. Für das Herstellen des erfindungsgemäßen Kugelgelenks kann die erste Teilstruktur, insbesondere das Kappenelement, dieses vormontierten Einlegers auf die Gelenkkugel oder eine Polfläche der Gelenkkugel des Kugelzapfens aufgesetzt werden. Hierzu kann das Verstärkungselement des Einlegers über die Gelenkkugel in Richtung des Gelenkzapfens bewegt werden, bis das Kappenelement an der Gelenckugel anliegt und die Polfläche abdeckt. Dann kann der Kugelzapfen zusammen mit dem Einleger in ein Werkzeug eingeführt werden. Mittels des Werkzeugs und/oder einer Halteeinrichtung kann der Einleger und/oder der Kugelzapfen in einer gewünschten Position gehalten werden. Alternativ kann zunächst der vormontierte Einleger in das Werkzeug eingesetzt und positioniert werden. Sodann kann die Gelenckugel in den in dem Werkzeug gehaltenen Einleger eingeführt und positioniert werden. Beispielsweise kann die Position der Gelenkkugel in Bezug zu dem Einleger mittels einer Positionierung des Gelenkzapfens erfolgen. Gemäß einer weiteren Alternative kann zunächst der Gelenkzapfen in einem Werkzeug positioniert werden. Anschließend wird der Einleger an der Gelenkkugel und/oder in dem Werkzeug positioniert. Der Gelenkzapfen kann mittels des Werkzeugs und/oder einer geeignet ausgebildeten Halteeinrichtung gehalten und/oder positioniert werden. Anschließend kann der Einleger mindestens teilweise oder vollständig mit einem Material, insbesondere einem Kunststoffmaterial, umspritzt werden. Hierdurch kann eine Gelenkschale und/oder ein Gelenkgehäuse hergestellt werden.

Aufgrund des Einlegers kann die Gelenkschale und/oder das Gelenkgehäuse aus Kunststoff und/oder faserverstärktem Kunststoff derart verstärkt werden, dass die zum Ausziehen der Gelenkkugel aus der Gelenkschale und/oder dem Gelenkgehäuse benötigte Ausziehkraft erhöht ist. Hierbei ist vorteilhaft, dass der gesamte Einleger werkzeuglos montierbar bzw. zusammensteckbar ist.

Von besonderem Vorteil ist ein Fahrwerksbauteil und/oder Lenker mit einem erfindungsgemäßen Einleger und/oder mit einem erfindungsgemäßen Kugelgelenk. Vorzugsweise ist der Einleger und/oder das Kugelgelenk in ein Fahrwerksbauteil oder in einen Lenker für ein Kraftfahrzeug integriert oder als ein Bestandteil eines Fahrwerkbauteils oder Lenkers ausgebildet. Im Fahrzeugbau kommen Kugelgelenke auf vielfältige Weise zum Einsatz. Insbesondere im Fahrwerk dienen Kugelgelenke dazu, Fahrwerksbauteile oder Fahrwerkskomponenten, wie beispielsweise Lenkerbauteile, Radträger, Spurstangen oder dergleichen gelenkig miteinander oder mit dem Fahrzeugaufbau bzw. einem daran befestigten Achsträger zu verbinden. Hierbei kann ein Kugelgelenk üblicherweise aus einem wenigstens einseitig offenen Gelenkgehäuse mit einer Gehäuseausnehmung sowie einem in der Gehäuseausnehmung schwenkbeweglich gegenüber dem Gelenkgehäuse gelagerten Kugelzapfen, dessen Gelenkzapfen aus der Gehäuseöffnung herausragt, bestehen. Zwischen dem Gelenkgehäuse und der dem Kugelzapfen zugeordneten Gelenkkugel kann eine Gelenkschale angeordnet sein, welche die Reibung und somit den Verschleiß des Gelenks trotz der zuweilen hohen betrieblichen Belastungen reduziert.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Ansicht eines an einer Gelenkkugel angeordneten erfindungsgemäßen Einlegers,
- Fig. 2: eine Seitenansicht des erfindungsgemäßen Einlegers gemäß Fig. 1,
- Fig. 3: eine Draufsicht auf den erfindungsgemäßen Einleger gemäß Fig. 1, und
- Fig. 4: eine weitere Seitenansicht des erfindungsgemäßen Einlegers gemäß Fig. 1 in einem teilweise umspritzten Zustand.

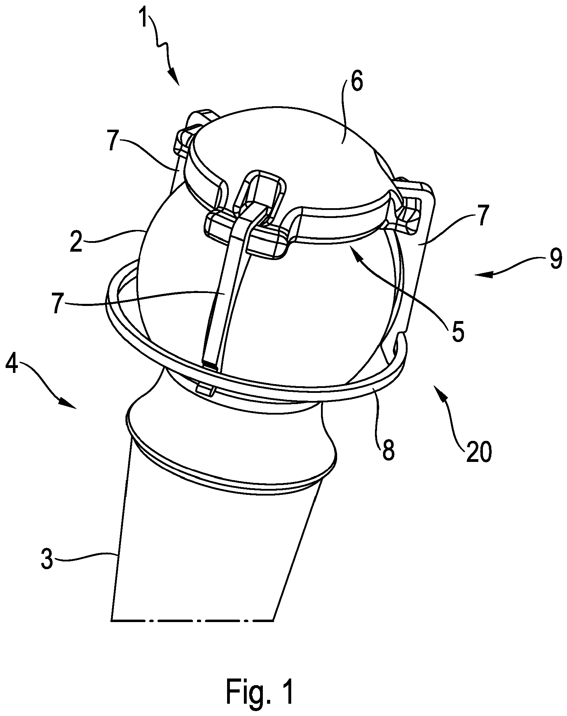

Figur 1 zeigt eine perspektivische Ansicht eines an einer Gelenkkugel 2 angeordneten erfindungsgemäßen Einlegers 1. Die Gelenkkugel 2 ist mit einem Gelenkzapfen 3 verbunden. Die Gelenkkugel 2 und der Gelenkzapfen 3 bilden zusammen einen einstückig ausgebildeten Kugelzapfen 4. Der Kugelzapfen 4 und der Einleger 1 können Bestandteil eines Kugelgelenks sein.

Der Einleger 1 hat eine erste Teilstruktur 6. Bei diesem Ausführungsbeispiel ist die erste Teilstruktur 6 als ein Kappenelement 6 ausgebildet. Ein von dem Gelenkzapfen 3 abgewandtes Ende der Gelenkkugel 2 weist eine Polfläche 5 auf. Die Polfläche 5 ist hier nicht näher erkennbar, da die Polfläche 5 mittels des Kappenelementes 6 des Einlegers 1 abgedeckt ist. Das Kappenelement 6 liegt ringförmig auf der sphärischen Oberfläche der Gelenkkugel 2 und die Polfläche 5 umlaufend auf.

Der Einleger 1 weist mehrere Verbindungselemente 7 auf. Bei diesem Ausführungsbeispiel sind drei Verbindungselemente 7 vorhanden. Jeweils ein erstes Ende der Verbindungselemente 7 ist mit dem Kappenelement 6 verbunden. Ausgehend von dem Kappenelement 6 erstrecken sich die Verbindungselemente 7 in Richtung des Gelenkzapfens 3.

Des Weiteren weist der Einleger 1 ein Verstärkungselement 8 auf. Das Verstärkungselement 8 ist bei diesem Ausführungsbeispiel als ein Ring ausgebildet. Die von dem Kappenelement 6 abgewandten Enden der Verbindungselemente 7 sind jeweils mit dem Verstärkungselement 8 verbunden. Das Verstärkungselement 8 ist in einem von der Polfläche 5 abgewandten und dem Gelenkzapfen 3 zugewandten Bereich bzw. Ende der Gelenkkugel 2 angeordnet. Die Verbindungselemente 7 sind gleichmäßig zueinander beabstandet um die Gelenkkugel 2 herum angeordnet.

Der Einleger 1 hat eine käfigartige Struktur 9. Hierbei ist mittels der Verbindungselemente 7 und dem Verstärkungselement 8 eine offene Teilstruktur 20 gebildet. In Zusammenwirkung oder Kombination der offenen Teilstruktur, nämlich der Verbindungselemente 7 und dem Verstärkungselement 8, mit dem Kappenelement 6 ist die käfigartige Struktur 9 ausgebildet. Hierbei realisieren insbesondere die Verbindungselemente 7 und das Verstärkungselement 8 eine käfigartige Ausbildung des Einlegers 1. Hierbei umgibt die käfigartige Ausbildung, die offene Teilstruktur und/oder die käfigartige Struktur 9 die Gelenkkugel 2 mit einem Abstand. Lediglich das Kappenelement 6 liegt an der Oberfläche der Gelenkkugel 2 an.

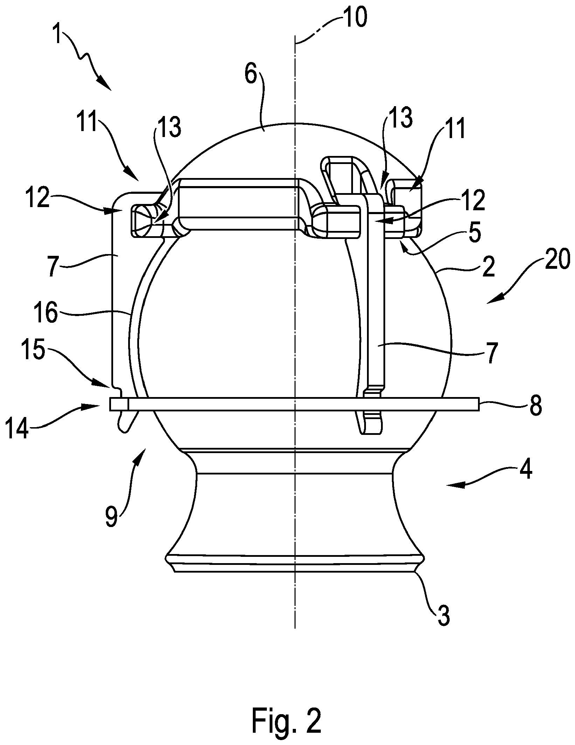

Figur 2 zeigt eine Seitenansicht des erfindungsgemäßen Einlegers 1 gemäß Figur 1. Der Einleger 1 weist eine Längsachse 10 auf, die als eine Mittellängsachse ausgebildet ist. Der Kugelzapfen 4 weist ebenfalls eine Längsachse bzw. Mittellängsachse auf, wobei gemäß der hier dargestellten Relativposition bzw. Nulllage des Kugelzapfens 4 in Bezug zu dem Einleger 1 die Längsachse des Kugelzapfens 4 mit der Längsachse 10 des Einlegers 1 zusammenfällt.

Die dem Kappenelement 6 zugewandten Enden der Verbindungselemente 7 sind mittels einer Verbindung 11 mit dem Kappenelement 6 verbunden. Bei diesem Ausführungsbeispiel ist die Verbindung 11 als eine Klippverbindung 11 ausgebildet. Hierzu weist das Verbindungselement 7 jeweils ein erstes Klippelement 12 auf, das mit einem dem Kappenelement 6 zugeordneten und korrespondierend zu dem ersten Klippelement 12 ausgebildeten zweiten Klippelement 13 zusammenwirkt.

Das dem Verstärkungselement 8 jeweils zugewandte Ende der Verbindungselemente 7 ist mittels einer Verbindung 14 mit dem Verstärkungselement 8 verbunden. Bei diesem Ausführungsbeispiel ist die Verbindung 14 als eine Rastverbindung 14 ausgebildet. Hierzu weist das dem Verstärkungselement 8 zugewandte Ende der Verbindungselemente 7 jeweils eine Rasteinrichtung 15 auf. Die Rasteinrichtung 15 ist zum Aufnehmen bzw. Halten des Verstärkungselementes 8 ausgebildet. Hier ist die Rasteinrichtung 15 im Wesentlichen als eine Vertiefung ausgebildet, in die das Verstärkungselement 8 einrastbar ist. Zum Einrasten des Verstärkungselementes 8 sind die Verbindungselemente 7 elastisch verformbar. Gemäß diesem Ausführungsbeispiel wird das Verstärkungselement 8 zum Herstellen der Verbindungen 14 von außen über die von dem Kappenelement 6 abgewandten Enden der Verbindungselemente 7 gestülpt. Hierdurch verformen sich die Verbindungselemente 7 zunächst elastisch nach innen in Richtung der Längsachse 10. Sobald das Verstärkungselement 8 die Rasteinrichtungen 15 erreicht, rücken die Verbindungselemente 7 wieder ein Stück nach außen. Hierdurch ist das Verstärkungselement 8 hinreichend sicher mit den Verbindungselementen 7 verbunden.

Die Verbindungselemente 7 weisen jeweils einen bogenförmigen Abschnitt 16 auf. Der bogenförmige Abschnitt 16 ist konkav ausgebildet und erstreckt sich von dem Kappenelement 6 in Richtung des Verstärkungselementes 8. Hierbei ist der bogenförmige Abschnitt 16 der Gelenkkugel 2 zugewandt. Der bogenförmige Abschnitt 16 ist derart ausgebildet, dass der bogenförmige Abschnitt 16 gleichmäßig von der Oberfläche der Gelenkkugel 2 beabstandet ist. Mittels des bogenförmigen Abschnittes 16 ist gewährleistet, dass das Verbindungselement 7 insgesamt und/oder gleichmäßig von der Oberfläche der Gelenkkugel 2 beabstandet ist. Darüber hinaus sind die Verbindungselemente 7 im Wesentlichen strangartig bzw. stabartig ausgebildet. Hierdurch sind relativ große Zwischenräume zwischen den voneinander beabstandeten Verbindungselementen 7 realisierbar. Des Weiteren erstrecken sich die Verbindungselemente 7 parallel zur Längsachse 10 des Einlegers 1.

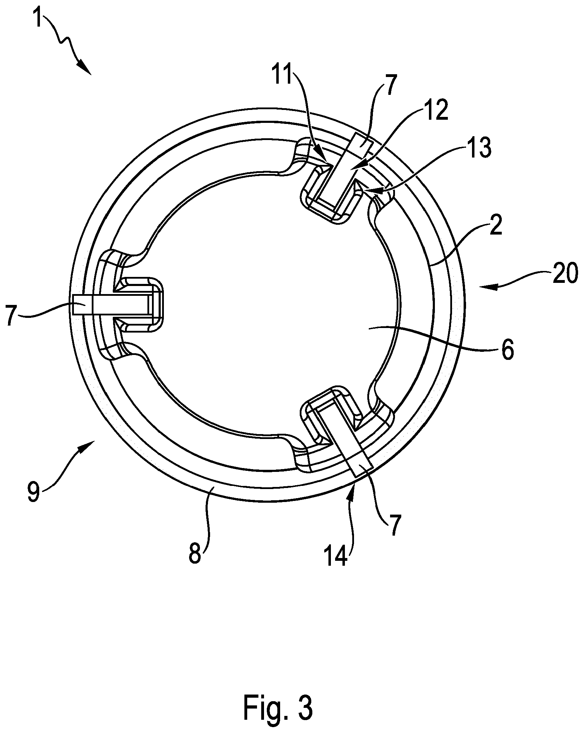

Figur 3 zeigt eine Draufsicht auf den erfindungsgemäßen Einleger 1 gemäß Figur 1. Hierbei ist gut zu erkennen, dass das Verstärkungselement 8 einen Innendurchmesser aufweist, der größer ist, als der maximale Außendurchmesser der Gelenkkugel 2. Hierdurch ist ein Aufsetzen des fertig vormontierten Einlegers 1 auf die Gelenkkugel 2 bzw. ein Einführen der Gelenkkugel 2 in den Einleger 1 vereinfacht.

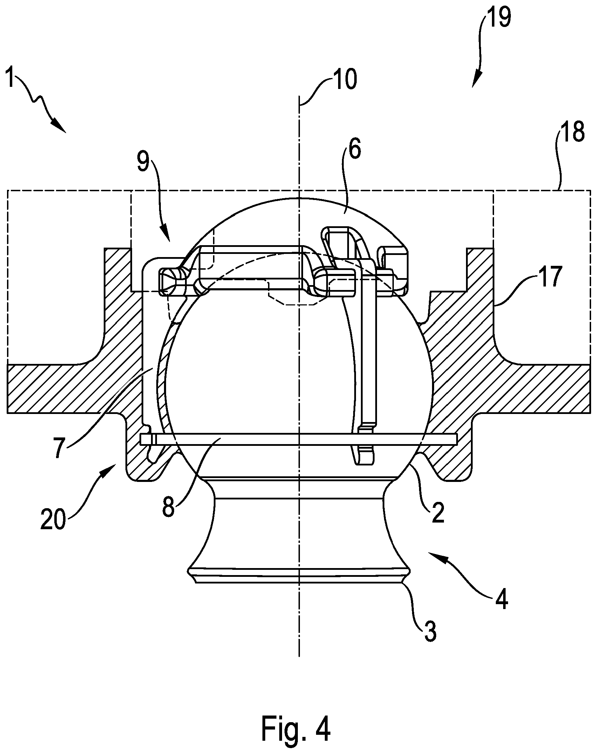

Figur 4 zeigt eine weitere Ansicht des erfindungsgemäßen Einlegers 1 gemäß Figur 1 in einem teilweise umspritzten Zustand. Bei diesem Ausführungsbeispiel ist der Einleger 1 teilweise in eine Gelenkschale 17 integriert bzw. zum Herstellen der Gelenkschale 17 umspritzt. Hier ist die offene Teilstruktur 20 mit einem Kunststoff teilweise umspritzt, wobei das Verstärkungselement 8 vollständig umspritzt ist. Lediglich die dem Kappenelement 6 zugewandten Enden der Verbindungselemente 7 sowie das Kappenelement 6 selbst sind bei diesem Beispiel nicht in die Gelenkschale durch Umspritzen integriert. In einer alternativen Ausführungsform kann der Einleger 1 vollständig in eine Gelenkschale integriert bzw. vollständig umspritzt sein.

Die Gelenkschale 17 liegt mindestens teilweise an der Oberfläche der Gelenkkugel 2 an. Hierbei ist die Gelenkkugel 2 bewegbar in der Gelenkschale 17 gelagert. Des Weiteren ist die Gelenkschale 17 gemäß dem hier gezeigten Ausführungsbeispiel in einem schematisch angedeuteten Gelenkgehäuse 18 angeordnet. Insgesamt ist somit ein Kugelgelenk 19 gezeigt, das ein Gelenkgehäuse 18 mit einer darin angeordneten Gelenkschale 17 und einer innerhalb der Gelenkschale 17 beweglich angeordneten Gelenkkugel 2 eines Kugelzapfens 4 aufweist. Das Gelenkgehäuse 18 kann als ein Teil eines Fahrwerkbauteils und/oder eines Lenkers ausgebildet oder in einen solchen integriert sein.

Hierbei ist das Kappenelement 6 aufgrund der käfigartigen Struktur 9 zuverlässig zum Abdecken einer Polfläche der Gelenkkugel 2 gehalten. Des Weiteren ist die bei diesem Beispiel aus einem Kunststoff gebildete Gelenkschale 17 mittels des Verstärkungselementes 8 und/oder den Verbindungselementen 7 zusätzlich verstärkt bzw. versteift. Hierdurch ist die für das Ausziehen der Gelenkkugel 2 aus der Gelenkschale 17 bzw. dem Gelenkgehäuse 18 notwendige Ausziehkraft erhöht.

### Bezugszeichen

- 1: Einleger
- 2: Gelenkkugel
- 3: Gelenkzapfen
- 4: Kugelzapfen
- 5: Polfläche
- 6: erste Teilstruktur (Kappenelement)
- 7: Verbindungselement
- 8: Verstärkungselement
- 9: käfigartige Struktur
- 10: Längsachse
- 11: Verbindung (Klippverbindung)
- 12: erstes Klippelement
- 13: zweites Klippelement
- 14: Verbindung (Rastverbindung)
- 15: Rasteinrichtung
- 16: bogenförmiger Abschnitt
- 17: Gelenkschale
- 18: Gelenkgehäuse
- 19: Kugelgelenk
- 20: offene Teilstruktur

## Patentansprüche

1. Einleger für ein Kugelgelenk (19) in einem Kraftfahrzeug mit einer ersten Teilstruktur (6) zum mindestens teilweise gleitlagernden Kontaktieren einer Gelenkkugel (2), wobei die erste Teilstruktur (6) mittels Umspritzen mit einer Gelenkschale (17) und/oder einem Gelenkgehäuse (18) verbindbar ist, wobei mittels einer offenen Teilstruktur (20) eine käfigartige Ausbildung zum Umgeben der Gelenkkugel (2) realisiert ist, **dadurch gekennzeichnet, dass** die erste Teilstruktur als ein Kappenelement (6) zum Abdecken einer Polfläche (5) der Gelenkkugel (2) ausgebildet ist und dass mehrere Verbindungselemente (7) Bestandteile der offenen Teilstruktur (20) sind, wobei ein erstes Ende der Verbindungselemente (7) jeweils formschlüssig und/oder kraftschlüssig an dem Kappenelement (6) befestigt ist und ein von dem ersten Ende abgewandtes zweites Ende der Verbindungselemente (7) jeweils mit einem Verstärkungselement (8) formschlüssig und/oder kraftschlüssig verbunden ist.

2. Einleger nach Anspruch 1, **dadurch gekennzeichnet, dass** das Kappenelement (6) zum Ausbilden eines abgedichteten und/oder geschlossenen Freiraums zwischen der Polfläche (5) und dem Kappenelement (6) ausgebildet ist.

3. Einleger nach Anspruch 1 oder 2, **dadurch gekennzeichnet, dass** mittels der, insbesondere zum Abdecken einer Polfläche (5) der Gelenkkugel (2) geschlossen ausgebildeten, ersten Teilstruktur (6) und der offenen Teilstruktur (20) eine käfigartige Struktur (9) gebildet ist, vorzugsweise ist die offene Teilstruktur (20) mit dem Kappenelement (6) verbunden und/oder ist aufgrund der Verbindung der offenen Teilstruktur (20) mit der ersten Teilstruktur (6) die käfigartige Struktur (9) gebildet, insbesondere ist die offene Teilstruktur (20) zum kontaktlosen Umgeben der Gelenkkugel (2) ausgebildet.

4. Einleger nach einem der vorhergehenden Ansprüche, **dadurch gekennzeichnet, dass** die offene Teilstruktur (20) formschlüssig, kraftschlüssig und/oder stoffschlüssig mit der ersten Teilstruktur (6) verbunden ist, insbesondere ist die offene Teilstruktur (20) mittels einer Steckverbindung oder Klippverbindung (11) an der geschlossenen Teilstruktur (6) befestigt oder die erste Teilstruktur (6) und die offene Teilstruktur (20) sind zusammen als eine einzige, einstückige Struktur ausgebildet.

5. Einleger nach einem der vorhergehenden Ansprüche, **gekennzeichnet durch** ein Verstärkungselement (8) zum Erhöhen einer Ausziehkraft für die Gelenkkugel (2) aus der käfigartigen Ausbildung und/oder einer käfigartigen Struktur (9), aus einer den Einleger (1) aufweisenden Gelenkschale (17) und/oder aus einem den Einleger (1) aufweisendem Gelenkgehäuse (18), insbesondere ist das Verstärkungselement (8) ringartig ausgebildet.

6. Einleger nach Anspruch 5, **dadurch gekennzeichnet, dass** das Verstärkungselement (8) rotationssymmetrisch und/oder koaxial zu einer Mittellängsachse (10) des Einlegers (1) angeordnet ist, insbesondere ist das Verstärkungselement (8) ein Bestandteil der offenen Teilstruktur (20).

7. Einleger nach einem der vorhergehenden Ansprüche, **dadurch gekennzeichnet, dass** die Verbindungselemente (7) jeweils strangartig und/oder stabartig ausgebildet.

8. Einleger nach Anspruch 7, **dadurch gekennzeichnet, dass** die Verbindungselemente (7) und das Verstärkungselement (8) die offene Teilstruktur (20) bilden.

9. Kugelgelenk mit einer Gelenkkugel (2) und einem Einleger (1) nach einem der vorhergehenden Ansprüche, wobei der Einleger (1) mindestens teilweise in eine Gelenkschale (17) und/oder ein Gelenkgehäuse (18) integriert und/oder der Einleger (1) mindestens teilweise mittels eines Spritzgussverfahrens zum Herstellen der Gelenkschale (17) und/oder des Gelenkgehäuses (18) umspritzt ist.

10. Kugelgelenk nach Anspruch 9, **dadurch gekennzeichnet, dass** die Gelenkschale (17) und/oder das Gelenkgehäuse (18) aus einem Kunststoffmaterial, insbesondere einem faserverstärktem Kunststoff, hergestellt ist.

11. Kugelgelenk nach Anspruch 9 oder 10, **dadurch gekennzeichnet, dass** die offene Teilstruktur (20) von der Gelenkkugel (2) beabstandet ist und der Abstand zwischen der offenen Teilstruktur (20) und der Gelenkkugel (2) mindestens teilweise mit einem Spritzgussmaterial ausgefüllt ist, insbesondere ist die offene Teilstruktur (20) mindestens teilweise von dem Spritzgussmaterial umgeben.

12. Kugelgelenk nach einem der Ansprüche 9 bis 11, **dadurch gekennzeichnet, dass** die erste Teilstruktur (6) in der Ausbildung als ein Kappenelement eine Polfläche (5) der Gelenkkugel (2) abdichtend abdeckt, insbesondere ist ein Verstärkungselement (8) in einem von der Polfläche (5) abgewandten und/oder einem Gelenkzapfen (3) zugewandten Bereich der Gelenkkugel (2) und von der Gelenkkugel (2) beabstandet angeordnet, vorzugsweise erstrecken sich mehrere von der Gelenkkugel (2) beabstandete Verbindungselemente (7) von dem Kappenelement (6) zum Verstärkungselement (8).

13. Fahrwerksbauteil und/oder Lenker mit einem Einleger (1) nach einem der Ansprüche 1 bis 8 und/oder mit einem Kugelgelenk nach einem der Ansprüche 9 bis 12.

14. Verfahren zum Herstellen eines Einlegers (1) nach einem der Ansprüche 1 bis 8, eines Kugelgelenks (19) nach einem der Ansprüche 9 bis 12 und/oder eines Fahrwerkbauteils oder Lenkers nach Anspruch 13, wobei eine käfigartige Ausbildung zum Umgeben der Gelenkkugel (2) realisiert wird.

## Claims

1. Insert for a ball joint (19) in a motor vehicle with a first part structure (6) for at least partially making contact in the manner of a plain bearing with a joint ball (2), it being possible for the first part structure (6) to be connected to a joint cup (17) and/or a joint housing (18) by means of overmoulding, a cage-like configuration for surrounding the joint ball (2) being realised by means of an open part structure (20), **characterized in that** the first part structure is configured as a cap element (6) for covering a pole face (5) of the joint ball (2), and **in that** a plurality of connecting elements (7) are constituent parts of the open part structure (20), a first end of the connecting elements (7) being fastened in each case in a positively locking and/or non-positive manner to the cap element (6), and a second end of the connecting elements (7) which faces away from the first end being connected in each case in a positively locking and/or non-positive manner to a reinforcement element (8).

2. Insert according to Claim 1, **characterized in that** the cap element (6) is configured for the configuration of a sealed and/or closed clearance between the pole face (5) and the cap element (6).

3. Insert according to Claim 1 or 2, **characterized in that** a cage-like structure (9) is formed by means of the open part structure (20) and the first part structure (6) which, in particular, is of closed configuration for covering a pole face (5) of the joint ball (2), and the open part structure (20) is preferably connected to the cap element (6) and/or the cage-like structure (9) is formed on the basis of the connection of the open part structure (20) to the first part structure (6), in particular the open part structure (20) is configured for surrounding the joint ball (2) in a contactless manner.

4. Insert according to one of the preceding claims, **characterized in that** the open part structure (20) is connected in a positively locking, non-positive and/or integrally joined manner to the first part structure (6), and, in particular, the open part structure (20) is fastened by means of a plug-in connection or clip connection (11) to the closed part structure (6), or the first part structure (6) and the open part structure (20) are configured together as a single, integrally formed structure.

5. Insert according to one of the preceding claims, **characterized by** a reinforcement element (8) for increasing a pull-out force for the joint ball (2) out of the cage-like configuration and/or a cage-like structure (9), out of a joint cup (17) which has the insert (1) and/or out of a joint housing (18) which has the insert (1), and, in particular, the reinforcement element (8) is of ring-like configuration.

6. Insert according to Claim 5, **characterized in that** the reinforcement element (8) is arranged rotationally symmetrically and/or coaxially with respect to a centre longitudinal axis (10) of the insert (1), and, in particular, the reinforcement element (8) is a constituent part of the open part structure (20).

7. Insert according to one of the preceding claims, **characterized in that** the connecting elements (7) are in each case of strand-like and/or bar-like configuration.

8. Insert according to Claim 7, **characterized in that** the connecting elements (7) and the reinforcement element (8) form the open part structure (20).

9. Ball joint with a joint ball (2) and an insert (1) according to one of the preceding claims, the insert (1) being integrated at least partially into a joint cup (17) and/or a joint housing (18), and/or the insert (1) being overmoulded at least partially by means of an injection moulding method in order to produce the joint cup (17) and/or the joint housing (18).

10. Ball joint according to Claim 9, **characterized in that** the joint cup (17) and/or the joint housing (18) are/is produced from a plastic material, in particular a fibre-reinforced material.

11. Ball joint according to Claim 9 or 10, **characterized in that** the open part structure (20) is spaced apart from the joint ball (2), and the spacing between the open part structure (20) and the joint ball (2) is filled at least partially with an injection moulded material, and, in particular, the open part structure (20) is surrounded at least partially by the injection moulded material.

12. Ball joint according to one of Claims 9 to 11, **characterized in that**, in the configuration as a cap element, the first part structure (6) covers a pole face (5) of the joint ball (2) in a sealing manner, and, in particular, a reinforcement element (8) is spaced apart from the joint ball (2) and in a region of the joint ball (2), which region faces away from the pole face (5) and/or faces a joint pin (3), and a plurality of connecting elements (7) which are spaced apart from the joint ball (2) preferably extend from the cap element (6) to the reinforcement element (8).

13. Chassis component and/or link with an insert (1) according to one of Claims 1 to 8 and/or with a ball joint according to one of Claims 9 to 12.

14. Method for producing an insert (1) according to one of Claims 1 to 8, a ball joint (19) according to one of Claims 9 to 12 and/or a chassis component or link according to Claim 13, a cage-like configuration for surrounding the joint ball (2) being realised.

## Revendications

1. Insert pour un joint à rotule (19) dans un véhicule automobile, comportant une première structure partielle (6) destinée à venir en contact par appui glissant au moins partiellement avec une rotule de joint (2),
la première structure partielle (6) pouvant être reliée par surmoulage à une cuvette de joint (17) et/ou à un boîtier de joint (18),
une configuration de type cage destinée à entourer la rotule de joint (2) étant réalisée au moyen d'une structure partielle ouverte (20), **caractérisé en ce que** la première structure partielle est réalisée comme élément capuchon (6) servant à recouvrir une surface polaire (5) de la rotule de joint (2) et **en ce que** plusieurs éléments de liaison (7) sont des parties constitutives de la structure partielle ouverte (20), une première extrémité des éléments de liaison (7) étant fixée respectivement par complémentarité de forme et/ou par force à l'élément capuchon (6) et une deuxième extrémité, opposée à la première extrémité, des éléments de liaison (7) étant fixée respectivement par complémentarité de forme et/ou par force à un élément de renforcement (8).

2. Insert selon la revendication 1, **caractérisé en ce que** l'élément capuchon (6) est formé pour la formation d'un espace libre rendu étanche et/ou fermé entre la surface polaire (5) et l'élément capuchon (6).

3. Insert selon la revendication 1 ou 2, **caractérisé en ce qu'**au moyen de la première structure partielle (6) formée de manière fermée en particulier pour recouvrir une surface polaire (5) de la rotule de joint (2) et de la structure partielle ouverte (20), une structure (9) de type cage est formée, de préférence la structure partielle ouverte (20) est reliée à l'élément capuchon (6) et/ou la structure (9) de type cage est formée du fait de la liaison de la structure partielle ouverte (20) à la première structure partielle (6), en particulier la structure partielle ouverte (20) est formée pour entourer sans contact la rotule de joint (2).

4. Insert selon l'une des revendications précédentes, **caractérisé en ce que** la structure partielle ouverte (20) est reliée par complémentarité de forme, par force et/ou par liaison de matière à la première structure partielle (6), en particulier la structure partielle ouverte (20) est fixée à la structure partielle fermée (6) au moyen d'une liaisons enfichable ou d'une liaison par clipsage (11) ou la première structure partielle (6) et la structure partielle ouverte (20) sont formées conjointement comme une structure unique d'une seule pièce.

5. Insert selon l'une des revendications précédentes, **caractérisé par** un élément de renforcement (8) servant à augmenter une force d'extraction pour la rotule de joint (2) hors de la configuration de type cage et/ou d'une structure (9) de type cage, hors d'une cuvette de joint (17) comprenant l'insert (1) et/ou hors d'un boîtier de joint (18) comprenant l'insert (1), en particulier l'élément de renforcement (8) est formé de manière annulaire.

6. Insert selon la revendication 5, **caractérisé en ce que** l'élément de renforcement (8) est disposé suivant une symétrie de révolution et/ou coaxialement à un axe médian longitudinal (10) de l'insert (1), en particulier l'élément de renforcement (8) est une partie constitutive de la structure partielle ouverte (20).

7. Insert selon l'une des revendications précédentes, **caractérisé en ce que** les éléments de liaison (7) sont formés respectivement en forme de cordon et/ou en forme de barre.

8. Insert selon la revendication 7, **caractérisé en ce que** les éléments de liaison (7) et l'élément de renforcement (8) forment la structure partielle ouverte (20) .

9. Joint à rotule comportant une rotule de joint (2) et un insert (1) selon l'une des revendications précédentes, l'insert (1) étant intégré au moins partiellement dans une cuvette de joint (17) et/ou un boîtier de joint (18) et/ou l'insert (1) étant surmoulé au moins partiellement par un procédé de moulage par injection pour produire la cuvette de joint (17) et/ou le boîtier de joint (18).

10. Joint à rotule selon la revendication 9, **caractérisé en ce que** la cuvette de joint (17) et/ou le boîtier de joint (18) sont produits à partir d'une matière synthétique, en particulier d'une matière synthétique renforcée par des fibres.

11. Joint à rotule selon la revendication 9 ou 10, **caractérisé en ce que** la structure partielle ouverte (20) est espacée de la rotule de joint (2) et la distance entre la structure partielle ouverte (20) et la rotule de joint (2) est remplie au moins partiellement d'une matière de moulage par injection, en particulier la structure partielle ouverte (20) est entourée au moins partiellement par la matière de moulage par injection.

12. Joint à rotule selon l'une des revendications 9 à 11, **caractérisé en ce que** la première structure partielle (6), dans la configuration comme un élément capuchon, recouvre de manière étanche une surface polaire (5) de la rotule de joint (2), en particulier un élément de renforcement (8) est disposé dans une région de la rotule de joint (2) opposée à la surface polaire (5) et/ou tournée vers un boulon de joint (3) et de manière espacée de la rotule de joint (2), de préférence plusieurs éléments de liaison (7) espacés de la rotule de joint (2) s'étendent à partir de l'élément capuchon (6) jusqu'à l'élément de renforcement (8).

13. Composant de châssis et/ou bras de liaison comportant un insert (1) selon l'une des revendications 1 à 8 et/ou comportant un joint à rotule selon l'une des revendications 9 à 12.

14. Procédé permettant de produire un insert (1) selon l'une des revendications 1 à 8, un joint à rotule (19) selon l'une des revendications 9 à 12 et/ou un composant de châssis ou un bras de liaison selon la revendication 13, une configuration de type cage étant réalisée pour entourer la rotule de joint (2).
